# EUROPÄISCHE PATENTSCHRIFT

(11) **EP 1 669 166 B1**
(45) Veröffentlichungstag und Bekanntmachung des Hinweises auf die Patenterteilung: **20.02.2008**
(21) Anmeldenummer: 05026939.8
(22) Anmeldetag: 09.12.2005
(51) Int. Cl.: B25F 5/00, B23B 39/16

(54) **Werkzeugkopf für ein Elektro-Hand-Arbeitsgerät zum Schrauben und/oder Bohren**
Tool head for a electrical hand-held device for screwing and/or drilling
Tête d'outil pour un appareil électrique portatif a une perceuse ou visseuse.

(30) Priorität: 09.12.2004 DE 202004019047 U
(43) Veröffentlichungstag der Anmeldung: 14.06.2006
(60) Teilanmeldung: 07015692.2
(73) Patentinhaber: Klein & More, 22041 Hamburg (DE)
(72) Erfinder: Friese, Hans-Joachim, 23669 Hemmelsdorf (DE)
(74) Vertreter: Glaeser, Joachim

(56) Entgegenhaltungen:
- US-A- 632 560
- US-A- 1 700 975
- US-A- 4 638 537
- US-A- 5 533 581

## Beschreibung

Die Erfindung bezieht sich auf einen Werkzeugkopf für ein Elektro-Hand-Arbeitsgerät zum Schrauben und/oder Bohren aufweisend eine in einem Gehäuse angeordnete Welle, eine mit der Welle antriebsmäßig verbundene Hülse zur Werkzeug- bzw. Bitaufnahme mit einer innen liegenden Ringnut für eine Kugel, die in ihrer Position in der Ringnut das Bit freigibt und bei Axialverschiebung der Hülse aus der Innennut freikommt und das Bit über die Hülse mit der Welle in Dreheingriff bringt.

Derartige Geräte sind als Handschrauber oder Handbohrmaschine bekannt US 4 638 537 A, US 1 700 975 A, und weisen im Wesentlichen ein trommelförmiges Gehäuse auf. Die Antriebswelle, und damit auch das eigentliche Werkzeug, sind koaxial zu diesem trommelförmigen Gehäuse ausgerichtet und dies bedingt, dass man mit dem entsprechenden Arbeitsgerät einen gewissen Abstand zu einer Wand oder dergleichen einhalten muss, eben weil die radiale Erstreckung des Gehäuses einen Mindestabstand zu einer Wand festlegt. Hinzu kommt noch, dass bei derartigen Handbohrmaschinen ein Handgriffteil mehr oder weniger radial von dem trommelförmigen Gehäuse absteht und die Möglichkeit in der Nähe einer Wand oder in einer Ecke einen Bohr- oder Schraubvorgang durchzuführen, weiterhin erschwert.

Es ist ein handgeführtes Elektrowerkzeug bekannt (DE 41 16 343 A1), bei welchem die Möglichkeit gegeben ist, vom so genannten Geradbohren auf Winkelbohren um zustellen, indem zwischen der Antriebswelle der Bohrmaschine und der Arbeitsspindel ein beliebiger Winkel zwischen 0 und 90° eingestellt werden kann. Bedingt durch das eingesetzte Winkelgetriebe ist es möglich, mit der bekannten Handbohrmaschine auch Arbeitsvorgänge relativ nah an einer Wand oder in einer Ecke durchzuführen.

Die vorliegende Erfindung will nun nicht nur die Möglichkeit schaffen, Arbeitsvorgänge in relativ kleinem Abstand zu einer Wand oder zu einer sonstigen Begrenzung ausführen zu können, sondern darüber hinaus auch mehrere Arbeitsvorgänge in relativ kurzen zeitlichen Abständen zueinander zu bewerkstelligen. Erreicht wird dies mit einem Werkzeug der eingangs genannten Art, das dadurch gekennzeichnet ist, dass zwei Hülsen-Wellen-Anordnungen im Gehäuse untergebracht und mit der Welle antriebsmäßig verbunden sind; die Hülsen jeweils mit einem radial vorstehenden Transportstift versehen sind; und dass die freien Enden der Transportstifte mit einem von Hand verdrehbaren Stellteil derart m Eingriff angeordnet sind, dass bei Drehung des Stellteils in einer Richtung die eine Hülse und in der anderen Richtung die andere Hülse axial zwecks Freigabe eines Bits verschoben werden kann.

Eine mit dem Werkzeugkopf gemäß der Erfindung ausgestattete Hand-Bohrmaschine kann also eingesetzt werden, um beispielsweise relativ schnell vom Bohren zum Schrauben überzugehen, indem eben die beiden Werkzeugaufnahmen mit den entsprechenden Werkzeugen bestückt werden. Ein einfacher Drehvorgang über einen kleinen Winkel ermöglicht das Auswerfen des nicht mehr benötigten Werkzeuges.

Bei dem Werkzeugkopf gemäß der Erfindung sind beide Arbeitsspindeln nicht zentrisch zur Achse des Gehäuses des Werkzeugkopfes angeordnet, sondern zu dieser Zentralachse versetzt. Dies ermöglicht das Arbeiten mit relativ geringem Abstand zu seitlichen Begrenzungen.

Die Erfindung wird nachstehend anhand der Zeichnungen beispielsweise erläutert.
- Figur 1: zeigt die wesentlichen Teile eines Werkzeugkopfes gemäß der Erfindung in einem Axiallängsschnitt.
- Figur 2: zeigt Einzelteile des Werkzeugkopfes gemäß der Erfindung in einem Radialschnitt.
- Figur 3: zeigt eine Draufsicht auf die in Figur 2 gezeigten Teile des Werkzeugkopfes von außen her.

In den Figuren ist mit 6 eine von einem nicht gezeigten Elektromotor angetriebene Welle, eine Arbeitswelle 6, bezeichnet und diese erstreckt sich bis in den vorderen Teil eines nur zum Teil gezeigten Gehäuses 4 und endigt dort mit dem als 2 bezeichneten vorderen Ende.

In der Welle 6 bzw. im freien Ende 2 befindet sich eine Kugel 5, die in ihrer Lage nach außen durch eine umgebende Hülse 3 oder Klemmhülse begrenzt ist.

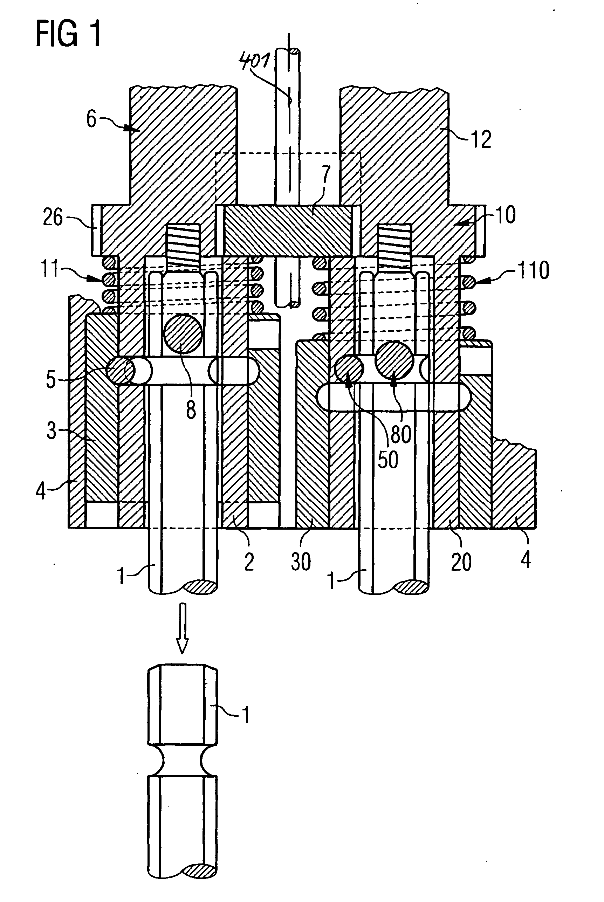

In der in Figur 1 linksseitig gezeigten Lage hat die Kugel 5 ihre radial außen liegende Position erreicht und dies ist die Lage, in der ein Werkstück 1 oder ein Bit eingesetzt werden könnte bzw. ausgeworfen werden könnte. In der Figur 1 ist linksseitig das Bit 1 in eingesetzter Lage und zur Verdeutlichung noch einmal ein Bit 1 in ausgeworfener Lage mit der für das Bit typischen Ringnut zu erkennen. Die Kugel wirkt mit dieser Ringnut und der Hülse 3 in der bekannten Art und Weise zusammen, so dass weitere Beschreibungen der Funktion dieser Teile nicht erforderlich sind. Die Hülse 3 nimmt diese Lage jedoch nur ein, wenn sie axial in Bezug auf den vorderen Teil 2 der Welle 6 gegen die Wirkung einer Spiralfeder 11 eingedrückt worden ist.

In der Figur 1 ist rechtsseitig eine zweite Hülsen-Wellen-Anordnung gezeigt, wobei einander entsprechende Teile ähnliche Bezugszahlen, jedoch um "0" ergänzt zeigen.

Im rechten Teil der Figur 1 ist die Hülse 30 in Arbeitslage gezeigt, d.h. die Kugel 50 nimmt dort die Lage ein, in der sie mit der Nut eines Bits 1 in Eingriff ist, so dass das Bit 1 gedreht wird, wenn sich die Welle 12 dreht.

Die Welle 6 wird über eine Antriebswelle 7, der Ausgangswelle eines Getriebes 402 bis 407 eines nicht gezeigten Antriebsmotors angetrieben. Ein Zahnrad 26 der Welle 6 kämmt mit einem Wechselrad 7, das auf einer Welle gelagert ist. Das Wechselrad 7 greift in einen Zahnkranz 10 einer zweiten Welle 12 ein und überträgt somit vom Motor her ein Drehmoment in gleichem Drehsinn.

Es ist ersichtlich, dass in der in Figur 1 gezeigten Lage zwei unterschiedliche Bits in den entsprechenden Hülsen angeordnet sein können und beide in gleicher Drehrichtung angetrieben werden. Dies macht deutlich, dass unterschiedliche Werkzeuge vor einem Arbeitsvorgang eingespannt werden können. Nachdem ein Arbeitsvorgang durchgeführt worden ist, kann das entsprechende Bit entfernt werden und der weiterführende Arbeitsvorgang mit dem anderen Bit durchgeführt werden.

In der Figur 1 ist ein radial vorstehender Stift 8 an der Hülse 3 befestigt und entsprechend ist ein Stift 80 an der Hülse 30 befestigt, der ebenfalls radial nach außen vorsteht.

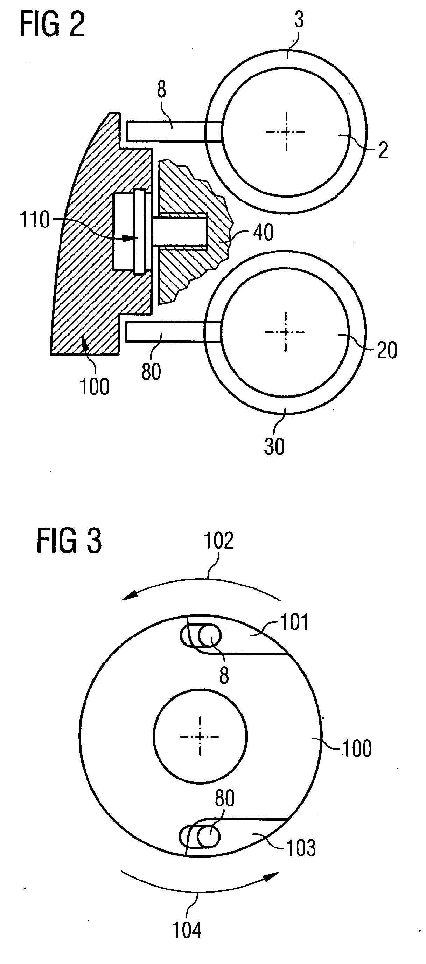

Die Figur 2 zeigt einen radialen Schnitt im Bereich der Stifte 8 und 80 und lässt erkennen, dass der Stift 8 mit der Hülse 3 und der Stift 80 mit der Hülse 30 verbunden ist. Die Figur 2 zeigt auch schematisch das Gehäuse 40 und in diesem Gehäuse ist ein Stellteil 100 bei 110 drehbar gelagert.

Figur 3 zeigt eine seitliche Ansicht der in Figur 2 gezeigten Teile und lässt erkennen, dass der Drehteil 100 im Wesentlichen die Form eines flachen Zylinders hat und an zwei im Wesentlichen 180° gegenüber liegenden Teilen Einschnitte 101 und 103 aufweist. In diesen Einschnitten sind die Stifte 8 und 80 zu erkennen. Die Einschnitte 101 und 103 sind nun so ausgestaltet, dass sie bei Betätigung des Stellteils 100 in der Drehrichtung 102 den Stift 8 freilassen, während auf den Stift 80 eine Bewegung übertragen wird. Es handelt sich hierbei zunächst um eine radiale Bewegung, die jedoch in Bezug auf die zugehörige Hülse 30 diese in axialer Richtung verschiebt. Bei Betrachtung der Figur 1 und beim Beginn einer Drehbewegung im Sinne des Drehpfeils 104 wird also der Stift 80 axial gegen die Wirkung der Feder 110 verschoben und auf diese Art und Weise wird die Kugelverbindung 50-30 so verändert, dass das Bit 1 entnommen oder ausgeworfen werden kann. Da diese Drehbewegung des Teils 100 gegen die Wirkung der Feder 110 erfolgt, nimmt der Stellteil 100 die in Figur 3 gezeigte Lage wieder ein, wenn man den Stellteil loslässt.

## Patentansprüche

1. Werkzeugkopf für ein Elektro-Hand-Arbeitsgerät zum Schrauben und/oder Bohren, aufweisend eine in einem Gehäuse (4) angeordnete Welle, eine mit der Welle antriebsmäßig verbundene Hülse (3) zur Werkzeug- bzw. Bitaufnahme mit einer innen liegenden Ringnut für eine Kugel (5), die in ihrer Position in der Ringnut das Bit (1) freigibt und bei Axialverschiebung der Hülse (3) aus der Innennut freikommt und das Bit (1) über die Hülse (3) mit der Welle (6) in Dreheingriff bringt, wobei zwei Hülsen-Wellen-Anordnungen (3, 30, 5, 50, 6,12) im Gehäuse (4) untergebracht und mit der Welle (6) antriebsmäßig verbunden sind; **dadurch gekennzeichnet, dass** die Hülsen (3, 30) jeweils mit einem radial vorstehenden Transportstift (8, 80) versehen sind; und dass die freien Enden der Transportstifte mit einem von Hand verdrehbaren Stellteil (100) derart im Eingriff angeordnet sind, dass bei Drehung des Stellteils in einer Richtung (102) die eine Hülse (3) und in der anderen Richtung (104) die andere Hülse (30) zwecks Freigabe eines Bits axial verschoben werden kann.

## Claims

1. Tool head for an electronic hand-held tool for screwing and/or drilling, comprising a shaft arranged in a housing (4), a sleeve (3) drivingly connected to the shaft for tool or bit reception, respectively, with an annular groove located at the inside for a ball (5), which releases the bit (1) in its position in the annular groove and is released from the inner groove with axial displacement of the sleeve (3) and brings the bit (1) through the sleeve (3) in rotary engagement with the shaft (6), wherein two assemblies (3, 30, 5, 50, 6, 12) consisting of sleeve and shaft are accommodated in the housing (4) and are drivingly connected with the shaft (6), **characterised in that** the sleeves (3, 30) are each provided with a radially protruding driving pin (8, 80); and that the free ends of the driving pins are arranged in engagement with a manually twistable adjusting part (100) such that with turning of the adjusting part in one direction (102) the one sleeve (3) and in the other direction (104) the other sleeve (30) can be axially displaced in order to release a bit.

## Revendications

1. Tête d'outil pour appareil électrique portatif de vissage et/ou de percement, qui comporte un arbre logé dans un boîtier (4), et, une douille (3) reliée en vue de son entraînement avec ledit arbre, destinée à recevoir un outil, respectivement un embout, et pourvue d'une rainure intérieure annulaire pour recevoir une bille (5) qui, après engagement dans ladite rainure annulaire, libère l'embout (1) et qui, lors d'un mouvement axial de la douille (3), se dégage de la rainure de sorte que l'embout (1) coopère, par l'intermédiaire de la douille (3), par engagement en vue de la rotation avec l'arbre (6), étant observé qu'il est prévu deux ensembles douille - arbre (3, 30, 5, 50, 6, 12) logés dans le boîtier (4) et reliés en vue de l'entraînement avec l'arbre (6), **caractérisée en ce que** les douilles (3), (30) comportent une broche de transport (8), (80) et **en ce que** l'extrémité libre des broches de transport coopère par engagement avec un élément de réglage (100) pouvant être tourné à la main de telle sorte que, lors du mouvement de rotation de l'élément de réglage dans une des directions (102), l'une (3) des douilles puisse être déplacée axialement en vue de libérer un embout, et que lors du mouvement de rotation de l'élément de réglage dans l'autre direction (104), l'autre douille (30) puisse être déplacée axialement en vue de libérer un embout.
